# FASCICULE DE BREVET EUROPEEN

(11) **EP 1 299 874 B1**
(45) Date de publication et mention de la délivrance du brevet: **11.02.2004**
(21) Numéro de dépôt: 01951765.5
(22) Date de dépôt: 03.07.2001
(51) Int. Cl.: G09F 27/00

(54) **ACTIVATION D'UNE BORNE MULTIMEDIA INTERACTIVE**
AKTIVIERUNG EINES INTERAKTIVEN MULTIMEDIASENDGERÄTES
ACTIVATING AN INTERACTIVE MULTIMEDIA TERMINAL

(30) Priorité: 13.07.2000 FR 0009438
(43) Date de publication de la demande: 09.04.2003
(73) Titulaire: FRANCE TELECOM, 75015 Paris (FR)
(72) Inventeur: MIROUZE, Michel, F-14790 Verson (FR); DEPRET, Eric, F-14000 Caen (FR); PARFAIT, Béatrice, F-14123 Cormelles le Royal (FR); THORIGNE, Yves, F-14790 Verson (FR)
(74) Mandataire: Cabinet Martinet & Lapoux
(86) Numéro de dépôt international: PCT/FR2001/002134
(87) Numéro de publication internationale: WO 2002/007135

(56) Documents cités:
- WO-A-00/28762
- FR-A- 2 788 191

## Description

La présente invention concerne de manière générale l'activation d'une borne multimédia interactive au moyen d'un terminal radio mobile.

Actuellement, un terminal radio mobile est principalement utilisé comme téléphone. Le nombre limité de touches du clavier du terminal rend l'usage du terminal peu ergonomique pour des applications et un recours quasiment en permanence à l'usage du clavier, par exemple pour la consultation d'informations ou de messages dans des serveurs. La visualisation des messages est en outre limitée à la taille réduite de l'écran du terminal. Par exemple, pour de la visiophonie au moyen du terminal téléphonique mobile, la petite taille de l'écran de celui-ci apparaît difficilement exploitable. En outre, comme il est connu, la bande passante d'un canal de transmission dans un réseau de radiotéléphonie est étroite et limite ainsi à des débits relativement faibles les communications notamment de données ou de type vidéo avec le terminal mobile.

Par ailleurs, des services de télécommunication sont accessibles à partir de terminaux dédiés de rue, comme par exemple les publiphones (marque déposée). Ces terminaux de rue sont essentiellement dédiés à la téléphonie bien que ceux-ci s'enrichissent progressivement de nouveaux services par exemple pour consulter des bases de données notamment relatifs à des services locaux tels que des numéros téléphoniques de taxis, des listes d'hôtels ou des bulletins météorologiques. Là encore, ces terminaux dédiés de rue sont limités par le faible débit de transmission de données à partir de ceux-ci.

En outre, la présence d'un combiné équipant chaque terminal de rue est perçue par une majorité des usagers comme un élément peu hygiénique.

Il apparaît donc nécessaire de fournir un moyen remédiant aux inconvénients précédents pour offrir à des usagers itinérants des fonctionnalités plus ergonomiques que celles offertes par un simple terminal radiotéléphonique mobile, tout en utilisant celui-ci pour accéder à ces fonctionnalités.

La demande de brevet WO 98/36552 propose de mettre à disposition d'usagers porteurs de terminaux radiotéléphoniques mobiles, une unité d'affichage d'informations qui est reliée à une unité d'interface d'usager, soit directement, soit par l'intermédiaire d'un serveur transmettant du texte ou d'autres informations visuelles. L'unité d'interface d'usager reçoit des commandes depuis un terminal radiotéléphonique mobile à travers le réseau radiotéléphonique dans lequel est inclus celui-ci, identifie des commandes transmises par le terminal mobile à destination de l'unité d'affichage et transmet également des commandes au serveur pour sélectionner des informations à afficher dans l'unité d'affichage. Les commandes sont transmises à l'unité d'affichage à partir du clavier du terminal radiotéléphonique mobile, ou par des commandes vocales reconnues par le terminal mobile.

L'unité d'affichage selon la demande de brevet précitée ne peut être utilisée que par un usager possédant un terminal radiotéléphonique mobile. Toute utilisation de l'unité d'affichage par un simple usager est interdite puisque l'unité d'affichage n'offre aucun moyen de commande directe, tel que clavier. L'interaction entre l'usager et l'unité d'affichage est seulement de nature visuelle.

Pour accéder à l'unité d'affichage, un usager ayant un terminal radiotéléphonique mobile doit se trouver devant l'unité d'affichage qui affiche en permanence un numéro de téléphone spécifique tant que l'unité est en mode inoccupé afin de composer le numéro téléphonique sur le clavier du terminal. L'unité d'interface d'usager répond à l'appel téléphonique effectué avec le numéro de téléphone de l'unité d'affichage de manière à identifier celle-ci en vue de lui transmettre des commandes et d'initialiser une session avec le serveur.

Cette activation de l'unité d'affichage exige la connaissance du numéro téléphonique d'appel de l'unité d'affichage et par conséquent la connaissance préalable de la localisation de l'unité d'affichage par l'usager, puis le déplacement de l'usager en face de l'unité d'affichage de manière à lire sur celle-ci son numéro d'appel téléphonique. En pratique, particulièrement pour un usager itinérant qui circule dans une zone apparemment inconnue en matière d'implantation d'unité d'affichage, il est impossible pour l'usager itinérant de se trouver rapidement devant une unité d'affichage.

Par ailleurs, la demande de brevet internationale WO/0028762 décrit un système pour transférer automatiquement sans interruption un appel téléphonique depuis un terminal radio mobile qui est déjà en communication dans un premier réseau de radiotéléphonie vers une station de base desservant un ordinateur de bureau avec téléphone fixe. La station de base est incluse dans un réseau radio local dans un immeuble relié au premier réseau par un réseau RNIS. Lorsque le terminal pénètre dans une zone de bureau déterminée autour de la station de base, un capteur de proximité capte par liaison infrarouge ou autre liaison à courte distance la présence du terminal mobile. Le terminal mobile transmet alors un code d'identification à un centre de commutation via la station de base dans le réseau local afin de déclencher un transfert automatique de l'appel en cours vers l'ordinateur, à la place du terminal mobile. Inversement, l'appel est transféré de l'ordinateur au terminal lorsque celui-ci quitte la zone déterminée.

L'invention a pour principal objectif de fournir une borne multimédia interactive qui peut être activée à la suite d'un appel depuis un terminal radio mobile et adaptée au type du terminal mobile sans que l'usager de celui-ci prenne connaissance d'un quelconque numéro d'appel téléphonique de la borne et sans que le terminal mobile établisse préalablement un appel téléphonique avec un terminal quelconque distant.

A cette fin, un procédé pour activer depuis un terminal radio mobile une borne interactive reliée à un réseau de télécommunication, le terminal mobile et la borne interactive comprenant des moyens respectifs pour échanger des données à travers une liaison radioélectrique ayant une couverture radioélectrique de proximité, la borne scrutant périodiquement la présence du terminal mobile dans ladite couverture radioélectrique, est caractérisé en ce qu'il comprend les étapes suivantes après signalement de la présence du terminal dans la couverture radioélectrique de proximité à la borne :
- déclarer un type de profil d'accès par le terminal mobile à la borne afin que le profil d'accès conditionne une communication entre la borne et le terminal mobile,
- transmettre un message depuis la borne au terminal mobile pour inviter le terminal à transmettre un identificateur du terminal à la borne, et
- transmettre l'identificateur du terminal mobile depuis la borne à un moyen de gestion à travers le réseau de télécommunication afin d'activer la borne par le moyen de gestion lorsque celui-ci valide l'identificateur du terminal radio mobile.

L'activation de la borne n'exige aucune connaissance d'un numéro téléphonique ou d'une adresse de la borne par l'usager du terminal. Il suffit à l'usager par exemple de sélectionner un item dans un menu principal de son terminal pour se diriger vers la borne la plus proche ou pour être directement en communication avec la borne.

Au sens de l'invention, le terminal radio mobile peut être un terminal radiotéléphonique mobile, ou tout autre objet portable du type micro-ordinateur portable ou assistant numérique personnel doté de moyens d'émission-réception radio de faible portée, ou bien encore terminal mobile radio bimode, c'est-à-dire à la fois téléphonique et radioélectrique de faible portée. La borne s'adapte ainsi au profil d'accès déclaré par le terminal mobile.

Selon une première variante de la deuxième réalisation, le terminal mobile est un terminal bimode tantôt pour des communications radiotéléphoniques avec un réseau de radiotéléphonie relié au réseau de télécommunication, tantôt pour des communications avec la borne à travers ladite liaison radioélectrique qui a de préférence une bande de fréquence plus élevée que celle du réseau de radiotéléphonie.

Le moyen de gestion peut être inclus au moins en partie dans un moyen de localisation nominal du réseau de radiotéléphonie.

Selon une deuxième variante, le terminal mobile est du type terminal radio avec une faible portée de quelques dizaines de mètres tel qu'un assistant numérique personnel ou un micro-ordinateur portable.

L'activation de la borne quelle que soit sa réalisation s'effectue, après la validation de l'identificateur du terminal par le moyen de gestion, en fonction d'une personnalisation des fonctionnalités de la borne au moyen d'un profil d'usager associé à l'identificateur validé du terminal et transmis depuis un moyen de gestion qui peut être un enregistreur de localisation nominal du réseau de radiotéléphonie, ou bien un serveur gérant les bornes et relié au réseau de télécommunication.

De préférence, une authentification de l'usager du terminal par le moyen de gestion est prévue avant la personnalisation des fonctionnalités de la borne.

La borne selon l'invention délivre une gamme de services interactifs de télécommunication à tout usager placé devant elle. La borne est accessible par l'usager soit directement comme une borne classique, soit par l'intermédiaire d'un terminal mobile. La gamme de services proposés recouvre en particulier le domaine de la téléphonie classique, celui de la visiophonie, de la consultation de serveurs notamment du réseau internet et de messageries. Cette liste n'est pas exhaustive, et peut s'enrichir de nouveaux services sur les réseaux de télécommunication.

L'utilisation de la borne répond principalement aux besoins notamment des personnes en situation de mobilité, qui souhaitent avoir accès à des services de télécommunications équivalents, voire enrichis, à ceux dont ils bénéficient par exemple à leur bureau.

L'invention concerne ainsi une borne interactive à activer depuis un terminal radio mobile comprenant un moyen de visualisation, un moyen d'interface de ligne relié à un réseau de télécommunication, un moyen de dialogue radio pour échanger des données avec le terminal mobile à travers une liaison radioélectrique ayant une couverture radioélectrique de proximité, la borne scrutant périodiquement la présence du terminal mobile dans ladite couverture radioélectrique. Elle est caractérisée en ce que :
- elle comprend un moyen pour mémoriser des profils d'accès de terminal afin qu'un profil d'accès déclaré par le terminal mobile à la borne conditionne une communication entre la borne et le terminal mobile, après signalement de la présence du terminal dans la couverture radioélectrique de proximité à la borne,
- le moyen de dialogue radio dans la borne transmet un message au terminal mobile pour inviter le terminal à transmettre un identificateur du terminal, et
- le moyen d'interface de ligne transmet l'identificateur du terminal mobile à un moyen de gestion à travers le réseau de télécommunication afin d'activer la borne par le moyen de gestion lorsque celui-ci valide l'identificateur du terminal radio mobile.

Pour un usager de terminal radio mobile, la borne fait office de terminal interactif offrant de larges possibilités de services, dans une ergonomie nettement enrichie par rapport à celle offerte par les terminaux mobiles. Ainsi, la consultation d'un serveur d'information se trouve particulièrement améliorée par l'utilisation de cette borne par rapport à un terminal mobile. L'usager retrouve un environnement familier. L'interactivité devient naturelle grâce d'une part à l'utilisation des touches d'un écran tactile et d'autre part à la qualité de l'écran qui reproduit en l'améliorant les possibilités offertes par les écrans classiques, tels que ceux des micro-ordinateurs. Cette ergonomie se trouve encore améliorée par un moyen pour régler la directivité de moyens audio inclus dans la borne.

La borne donne accès à des réseaux de télécommunication de haut débit, en hébergeant des services évolutifs nécessitant d'importants débits d'information. L'accès aux différents réseaux de télécommunications n'est en aucune manière spécifique. Ainsi la borne peut accepter de nouveaux services en fonction de leur disponibilité et de l'attente des utilisateurs.

En complément de la fourniture d'une gamme de services de télécommunication, la borne se comporte comme un terminal multi-usage. D'une part, cette borne remplit le rôle de terminal fixe intelligent pour les services de télécommunication, mais permet aussi d'afficher des informations à caractères publicitaires ou d'intérêts locaux. Cette seconde possibilité est permise lorsque la borne n'est pas activée par un usager.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est une vue de la face d'une borne multimédia interactive selon l'invention intégrée dans un mur ;
- la figure 2 est un bloc-diagramme schématique de la borne pour l'ensemble des réalisations décrites ci-après ;
- la figure 3 est un bloc-diagramme schématique de la liaison entre un terminal radiotéléphonique mobile et la borne à travers un serveur de messages courts et un serveur de bornes selon une première réalisation de l'invention ;
- la figure 4 est un algorithme d'activation de la borne selon la première réalisation ;
- la figure 5 est un bloc-diagramme schématique de la liaison de plusieurs terminaux radio mobiles avec la borne pour une deuxième réalisation d'activation de borne selon l'invention ; et
- les figures 6 et 7 sont des algorithmes d'établissement de connexion et de demande de transfert de données selon la deuxième réalisation du procédé d'activation de borne selon l'invention.

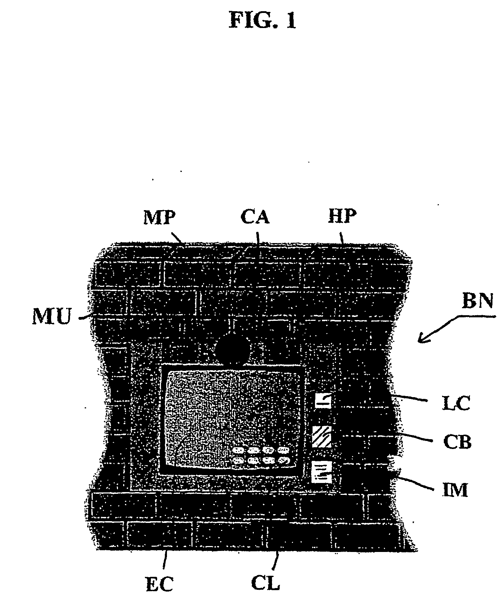

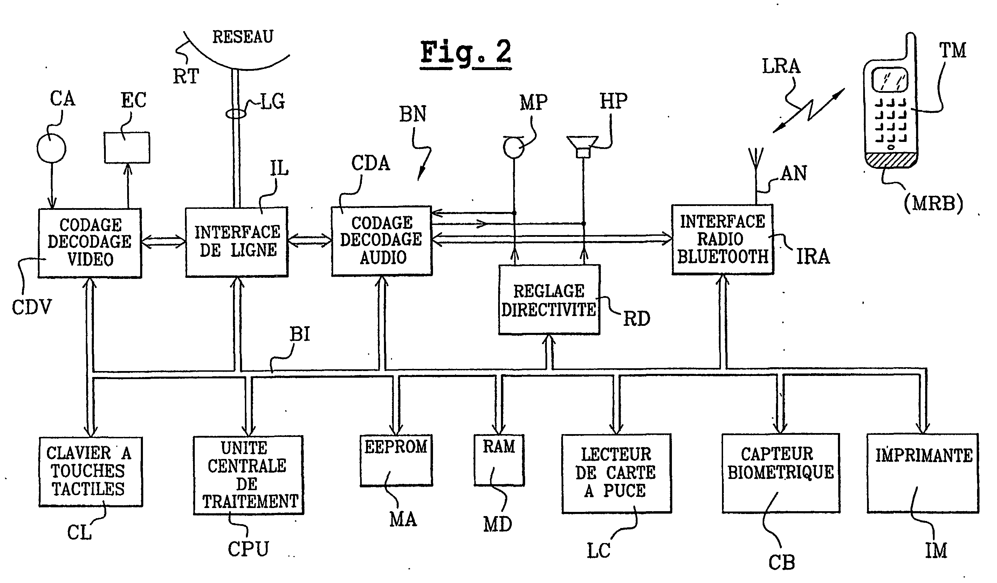

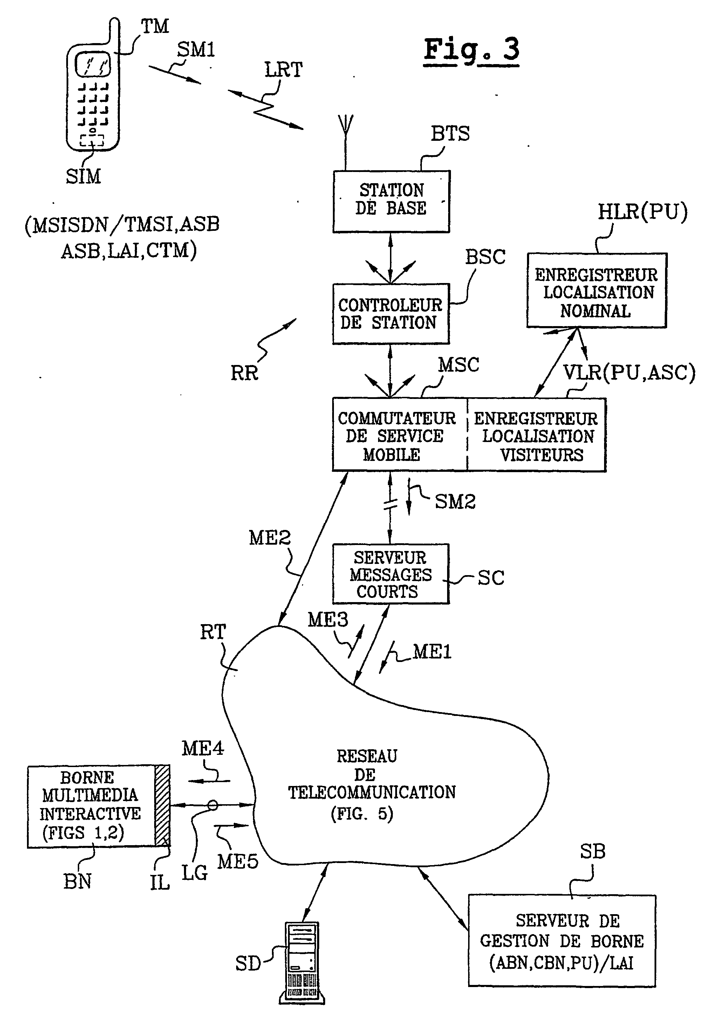

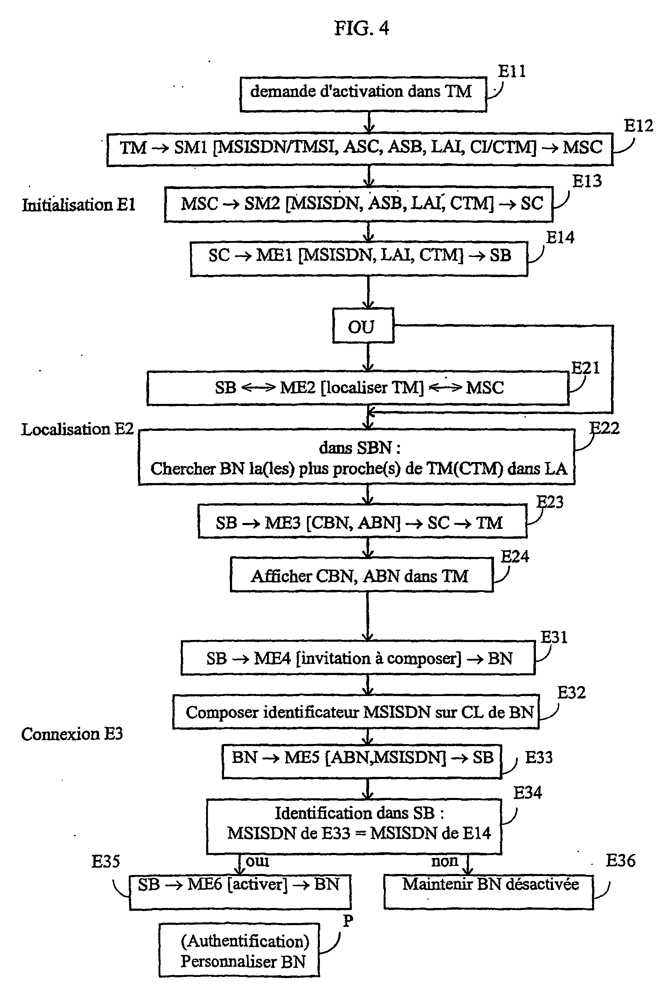

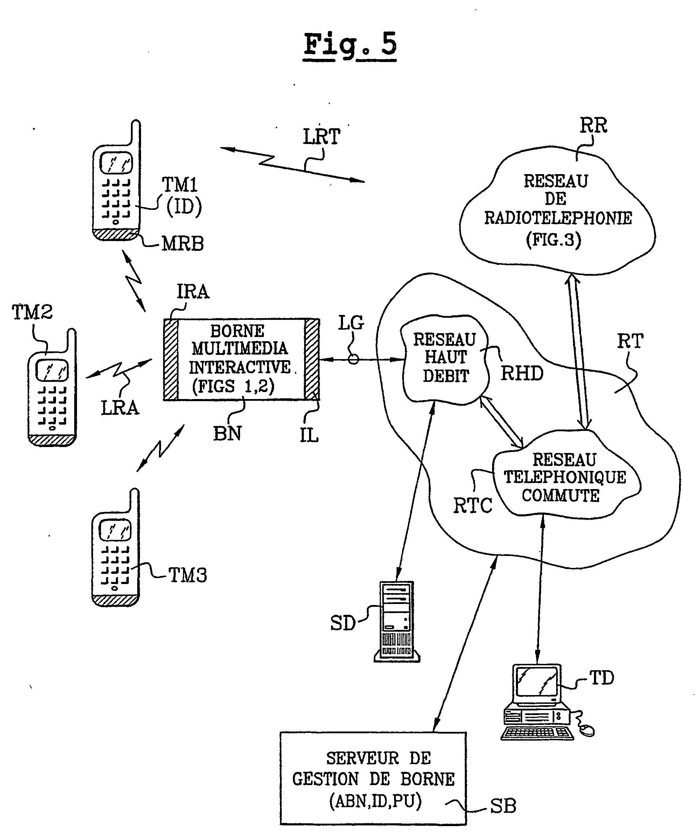

Une réalisation complète d'une borne multimédia interactive BN selon l'invention est montrée schématiquement à la figure 1 pour ce qui concerne des moyens de la borne visibles des usagers et à la figure 2 pour ce qui concerne l'architecture fonctionnelle interne de la borne.

Comme montré à la figure 1, des moyens audiovisuels peuvent être intégrés dans un mur par exemple dans la paroi d'une cabine ou en façade d'un immeuble, ou bien à l'intérieur d'un local. Par exemple, la borne est installée dans des sites de grande fréquentation, tels que gares, galeries marchandes, hôtels, bureaux de poste, etc. Les moyens audiovisuels comprennent principalement des moyens audio incluant au moins un microphone directif MP et au moins un haut-parleur directif HP, et des moyens vidéo incluant essentiellement un écran d'unité de visualisation EC, doté d'un clavier à touches tactiles CL et une caméra CA. De préférence le clavier est associé à une touche de navigation ou une boule de commande de type "trackball" de manière à sélectionner des menus sur l'écran de la borne.

Les moyens audio MP et HP autorisent, grâce à leur directivité, un dialogue individualisé entre un usager placé devant la borne BN et cette borne. Dans le cas d'une communication téléphonique où les moyens audio de la borne sont dans l'état actif, l'usager est sensible à la confidentialité de sa conversation afin que celle-ci ne puisse être écoutée que dans un volume réduit. Avantageusement, la borne BN comprend un circuit de réglage de directivité RD pour régler la directivité des moyens audio MP et HP en fonction des caractéristiques physiques de l'usager et particulièrement de la taille et de la position de celui-ci devant la borne. Le réglage de la directivité des moyens audio est effectué soit par des touches du clavier CL, soit par un moyen de reconnaissance vocale qui détecte des commandes vocales transmises par le microphone MP.

L'unité d'affichage de l'écran EC est analogue à celle à haute résolution d'un ordinateur personnel de manière à visualiser nettement des images en trois dimensions. Les touches du clavier CL servent à régler la visualisation des images sur l'écran. La caméra CA capte des images de l'usager se trouvant devant la borne afin de les transmettre à un interlocuteur distant et utiliser ainsi la borne comme un visiophone.

Comme montré également à la figure 1, la borne BN comporte optionnellement un moyen d'authentification d'usager sous la forme d'un lecteur de carte à puce LC, dite également carte à microcontrôleur, à contacts ou sans contact, pour télécarte téléphonique, carte bancaire ou porte-monnaie électronique par exemple. Le moyen d'authentification d'usager peut comprendre optionnellement en complément ou en remplacement du lecteur de carte LC, un capteur biométrique CB, par exemple un capteur d'empreinte digitale, ou un capteur d'iris d'oeil. La borne est encore équipée de préférence d'une imprimante IM afin qu'un usager puisse emporter une copie d'une page d'écran.

La borne offre ainsi de multiples fonctionnalités interactives à un simple usager, avec ou sans terminal radio portable, afin de retrouver les fonctionnalités et l'ergonomie d'un terminal bureautique.

Comme montré à la figure 2, la borne BN est organisée autour d'une unité centrale de traitement CPU comprenant au moins un processeur relié classiquement par un bus de système interne BI à une mémoire non volatile MA de type EEPROM ou SRAM contenant des applications notamment pour l'activation et la personnalisation de la borne selon l'invention et à une mémoire de données MD de type RAM pour mémoriser des données échangées avec le monde extérieur de la borne, y compris des serveurs et des terminaux mobiles, notamment par l'intermédiaire du clavier CL, d'une interface de ligne IL et d'une interface radio IRA. Le bus interne BI dessert également le clavier à touches tactiles CL, le lecteur de carte LC, le capteur biométrique CB et l'imprimante IM, ainsi que les interfaces IL et IRA. L'unité centrale CPU est ainsi reliée par le bus BI à un circuit de codage-décodage vidéo CDV d'unité de visualisation relié directement à l'interface IL, et à un circuit de codage-décodage audio CDA relié directement aux interfaces IL et IRA.

L'interface de ligne IL relie la borne BN à une ligne de transmission LG et est adaptée à la terminaison au niveau du commutateur de rattachement du réseau de la ligne LG. Par exemple l'interface de ligne IL comprend classiquement un modem, de préférence à vitesse rapide et multiplexant numériquement le son et des données d'images, ou bien un modem RNIS (Réseau Numérique à Intégration de Services) ou bien encore un modem ADSL (Asymetric Digital Subscriber Line).

L'interface radio IRA pour une borne selon la deuxième réalisation de l'invention comprend une antenne AN pour être reliée par liaison radioélectrique LRA ayant une couverture radioélectrique de proximité, c'est-à-dire de faible portée, typiquement selon la norme DECT (Digital Enhanced Cordless Telecommunications) ou selon la technologie Bluetooth à laquelle référence sera faite à titre d'exemple dans la suite, à au moins un terminal radio mobile TM d'un usager, par exemple un radiotéléphone bimode portable, ou bien un assistant numérique personnel PDA (Personal Digital Assistant) ou un micro-ordinateur portable doté d'un module d'émission-réception radio MRB. L'interface radio IRA sépare les signaux radio transmis et reçus, les transpose en fréquence et les convertit analogiquement et numériquement.

Le circuit de codage-décodage audio CDA code numériquement les signaux audio captés par le microphone MP pour les transmettre vers la ligne de transmission LG à travers l'interface IL ou vers la liaison radio LRA à travers l'interface IRA, et inversement décode des signaux numériques reçus depuis la ligne LU ou la liaison LRA vers le haut-parleur HP. Le circuit CDA comprend également un moyen de reconnaissance vocale pour coder des commandes vocales de l'usager captées par le microphone MP à la place de commandes signifiées par le clavier CL. Le circuit de réglage de directivité RD est interconnecté entre le circuit de codage-décodage audio CDA et l'ensemble à microphone MP et haut-parleur HP.

Le circuit de codage-décodage vidéo CDV principalement compresse le signal d'image numérique délivré par la caméra CA pour transmettre un signal d'images compressées dans la ligne d'usager LG à travers l'interface IL, et inversement décompresse un signal d'images compressées reçu par la ligne LG à travers l'interface IL afin de visualiser des images par exemple d'un interlocuteur distant sur l'écran EC. Le circuit CDV participe également au réglage de la visualisation d'images sur l'écran depuis le clavier CL ou le circuit CDA. Comme on le verra dans la suite, l'écran EC sert à visualiser des informations provenant par exemple d'un serveur SD que l'usager a demandées à travers la borne BN.

Une première réalisation et une première variante d'une deuxième réalisation du procédé d'activation d'une borne multimédia interactive BN sont décrites ci-après en supposant, à titre d'exemple, qu'un terminal radio mobile TM est doté des fonctionnalités essentielles d'un terminal radiotéléphonique classique de type GSM 900, DCS 1800 ou de type UMTS (Universal Mobile Telecomunication System). Afin de fixer les idées, on se référera dans la suite à l'infrastructure d'un réseau de radiotéléphonie RR selon la norme GSM. Il sera également supposé que l'usager du terminal TM utilise pendant l'activation de préférence les moyens audio, microphone et écouteur, du terminal mobile TM, si bien que la borne BN présente au minimum l'écran EC et le clavier CL à l'usager, en référence à la figure 1.

Selon la première réalisation montrée à la figure 3, l'activation de la borne BN est effectuée par l'intermédiaire d'un service de messages courts SMS (Short Message Service) qui autorise des échanges de messages courts entre le terminal radiotéléphonique mobile TM et une entité externe au réseau de radiotéléphonie cellulaire RR dont dépend le terminal TM. L'entité externe est un serveur de gestion de borne SB qui est relié à l'un des serveurs de messages courts SC (Short Message Service Center) associé au réseau de radiotéléphonie cellulaire RR.

Le serveur de messages courts SC est relié au moins à un commutateur de service mobile MSC inclus dans le réseau fixe du réseau de radiotéléphonie RR, directement ou à travers un réseau intermédiaire de type X25 ou RNIS.

Dans la figure 3 sont représentés schématiquement les moyens principaux du réseau de radiotéléphonie RR de type GSM à titre d'exemple, reliant à un instant donné le terminal radiotéléphonique mobile TM au serveur de messages courts SC. Les moyens principaux sont une station de base courante BTS desservant par liaison radiotéléphonique LRT la cellule courante dans laquelle se trouve momentanément le terminal mobile TM, un contrôleur de station de base BSC et le commutateur de service mobile déjà cité MSC. Le commutateur MSC est associé à un enregistreur de localisation des visiteurs VLR qui gère au moins une zone de localisation (Location Area) du réseau RR comportant quelques cellules à quelques dizaines de cellules et enregistre des profils d'usager se trouvant provisoirement dans cette zone.

Un réseau de télécommunication RT également montré schématiquement à la figure 3 relie la borne BN, la partie fixe du réseau de radiotéléphonie RR et le serveur de gestion de borne SB. Le réseau RT incorpore de manière générale tout réseau de télécommunication y compris au moins un réseau de téléphonie commuté RTC, et un réseau à haut débit RHD du type internet comme montré à la figure 5.

Le serveur de gestion de borne SB contient une base de données répertoriant les adresses ABN des bornes BN en fonction de leurs coordonnées géographiques CBN, latitude et longitude, sur le territoire couvert par le réseau de radiotéléphonie RR, et plus précisément en fonction de zones de localisation (Location Area) du réseau RR. Le serveur de borne SB contient également des profils d'usager PU relatifs à des usagers qui ont récemment utilisés des bornes BN en association avec les adresses ABN de celles-ci.

L'activation de la borne BN depuis le terminal radiotéléphonique mobile TM selon la première réalisation comprend essentiellement trois étapes principales, une étape d'initialisation E1, une étape de localisation de terminal mobile E2 et une étape de connexion entre terminal et borne E3, chacune de ces étapes comprenant des sous-étapes comme montré à la figure 4.

Comme il est connu, le terminal radiotéléphonique mobile TM contient une carte d'identité d'usager amovible SIM (Subscriber Identity Module) dont la mémoire non volatile EEPROM a mémorisé des particularités du profil de l'usager, notamment le numéro international de l'usager mobile MSISDN (Mobile Station ISDN Number), l'identificateur temporaire TMSI (Temporary Mobile Station Identity) attribué au terminal TM par l'enregistreur local VLR, l'identificateur LAI (Location Area Identification) de la zone de localisation dans le réseau RR où se trouve momentanément le terminal mobile TM et qui est couverte par les stations de base reliées au commutateur MSC, ainsi qu'une adresse ASB du serveur de borne SB. La carte SIM ne contient aucune indication relative à l'identité d'une borne multimédia interactive BN selon l'invention.

Pour demander l'activation d'une borne multimédia interactive dans le terminal TM, l'usager appuie sur une touche spécifique sur le clavier du terminal, ou bien sélectionne un item d'activation de borne multimédia dans un menu principal à une sous-étape E11. La carte SIM est à cet égard pro-active afin d'initialiser des actions dans le terminal mobile TM et établit des commandes pro-actives encapsulées dans des réponses connues sous le terme SIM Application Toolkit.

A la suite de cette demande d'activation, le terminal TM compose et transmet au commutateur de service mobile MSC un message court SM1 comprenant en tant qu'adresse de source l'identificateur provisoire TMSI ou le numéro d'usager mobile MSISDN, en tant qu'adresse de destination l'adresse ASC d'un serveur de messages courts SC et l'adresse ASB du serveur de borne SB, ainsi que l'identificateur de zone de localisation LAI à une sous-étape E12. Le profil de l'usager PU est consulté dans l'enregistreur VLR en réponse au message SM1 pour substituer à l'identificateur temporaire TMSI reçu dans le message SM le numéro téléphonique de l'usager MSIN (Mobile Subscriber Identification Number) ou MSISDN (Mobile Station ISDN Number) si ce dernier n'est pas contenu dans le message SM1 et extraire l'adresse de serveur de messages courts ASC afin que le comutateur MSC constitue un deuxième message court SM2 comprenant au moins les paramètres MSISDN, ASB et LAI à une sous-étape E13.

Du message SM2 reçu par le serveur de messages courts SC est extrait l'adresse de serveur ASB de manière à transmettre un message ME1 contenant le numéro MSISDN et l'identificateur de zone de localisation LAI au serveur de borne SB à une sous-étape E14.

A l'étape principale E2, le serveur de borne SB cherche à localiser le terminal TM dans la zone de localisation identifiée par l'identificateur LAI de manière à diriger l'usager du terminal TM vers l'une des bornes multimédia interactives BN les plus proches incluses dans la zone de localisation identifiée.

Selon une première variante de localisation, il est rappelé que chaque station de base du réseau RR diffuse également un identificateur de cellule CI (Cell Identity) dans la zone de localisation LA. Le terminal TM introduit également l'identificateur de cellule CI correspondant à la station de base courante BTS dans le message court SM1. L'enregistreur VLR associé au commutateur MSC desservant la station de base courante BTS extrait l'identificateur de cellule CI pour lui faire correspondre les coordonnées géographiques en latitude et longitude de la station de base courante BTS qui sont, selon cette première variante, réputées être les coordonnées de localisation géographique CTM approximatives du terminal TM. Les coordonnées CTM sont également insérées dans le message court SM2 par le commutateur MSC, puis dans le message ME1 par le serveur SC, et sont extraites des messages reçus ME1 par le serveur de gestion de borne SB. Le terminal mobile TM est ainsi localisé en fonction de l'identificateur CI de la cellule courante où se trouve le terminal mobile et donc des coordonnées géographiques de la station de base du réseau de radiotéléphonie avec laquelle il communique.

Grâce à la connaissance de l'identificateur reçu de la zone de localisation LAI, le serveur SB consulte dans une base de données la liste des bornes BN se trouvant dans la zone de localisation de manière à comparer leurs coordonnées de localisation géographique CBN avec celles CTM du terminal TM déterminées précédemment, à une sous-étape E22. Les coordonnées géographiques CBN et/ou l'adresse ABN de la borne BN la plus proche sont introduites dans un message ME3 à destination du serveur de messages courts SC qui les retransmet sous forme de messages courts vers le terminal TM à une sous-étape E23. Puis à une sous-étape E24, le terminal affiche les coordonnées CBN et/ou l'adresse ABN de la borne la plus proche. En pratique, les coordonnées CBN peuvent être affichées sur un plan de la situation locale de la borne et du terminal, et/ou l'adresse affichée ABN comporte le numéro, la rue et la ville où est située la borne BN et l'adresse ABN, éventuellement complétés par un numéro de téléphone ou une adresse IP de réseau internet de la borne.

En variante, au lieu de transmettre les coordonnées géographiques et l'adresse de la borne BN la plus proche, le serveur de gestion de borne SB transmet des coordonnées de localisation, telles qu'adresses, de deux ou trois bornes multimédia interactives les plus proches du terminal TM dans le message ME2 de manière à afficher tous ces paramètres et à laisser le soin à l'usager de se rendre vers l'une de ces bornes pour l'activer.

Selon une deuxième variante de localisation, le terminal mobile TM est localisé par triangulation de localisation, c'est-à-dire par mesure de puissance de signal et de temps de propagation dans chacune de trois stations de base voisines, dont celle courante, incluses dans la zone de localisation identifiée. Les trois stations de base sont sélectionnées dans une liste attachée à la station de base courante afin de présenter un niveau de puissance suffisant pour maintenir un appel dans le terminal. Les distances entre le terminal et les trois stations de base sélectionnées sont calculées dans le commutateur MSC dont dépend la station de base courante. Les coordonnées de localisation géographique CTM du terminal mobile TM ainsi déterminées en longitude et latitude dans le commutateur MSC sont demandées et recueillies par le serveur de gestion de borne SB au moyen de messages ME2 échangés avec le commutateur MSC à une sous-étape E21 comprise entre les sous-étapes E14 et E22.

Selon une troisième variante de localisation, au lieu de localiser géographiquement le terminal mobile TM dans la station de base courante, le terminal mobile TM détermine lui-même sa localisation par triangulation en mesurant des niveaux de puissance émis par la station de base courante et deux stations de base voisines ayant les niveaux de puissance les plus élevés et en recueillant les coordonnées géographiques des trois stations de base grâce à la diffusion périodique des coordonnées géographiques des stations de base de la zone de localisation LA dans un canal prédéterminé émis périodiquement par la station de base courante, par exemple le canal BCCH (Broadcast Control CHannel) selon la norme GSM. Dans cette variante, le terminal TM introduit lui-même les coordonnées géographiques CTM dans le message court SM1 à la sous-étape E12. A la sous-étape E14, le serveur de borne SB extrait du message ME1 les coordonnées du terminal CTM avec l'identificateur de zone de localisation LAI de manière à chercher la ou les bornes les plus proches du terminal TM à la sous-étape E22 qui est suivie des sous-étapes E23 et E24.

Selon une quatrième variante de localisation, les coordonnées géographiques CTM du terminal TM sont déterminées au moyen d'un dispositif de guidage par satellites géostationnaires, dit système GPS (Global Positioning System) qui est intégré dans le terminal mobile TM. Ce système fournit également les coordonnées géographiques CTM pour que le terminal TM les introduise lui-même dans le message SM1 à l'étape E12 qui est ainsi traité comme dans la troisième variante de localisation.

Selon toutes ces variantes de localisation, si aucune borne n'est localisée dans la zone identifiée LA, le serveur SB transmet un message d'erreur au terminal mobile TM à travers le serveur SC afin de recommencer au moins une fois la demande d'activation, ou bien d'inviter l'usager à se déplacer dans une zone susceptible de contenir au moins une borne multimédia interactive.

Après la sous-étape E24, le serveur de gestion de borne SB invite l'usager à composer l'identificateur du terminal TM dans la borne la plus proche, ou en variante dans l'une des bornes les plus proches, en transmettant un message d'invitation à composer ME4 aux bornes les plus proches et inactives, c'est-à-dire disponibles pour une session interactive avec l'usager. Le contenu du message ME4 est affiché sur les écrans EC de ces bornes à une sous-étape E31. Au moyen du clavier à touches tactiles CL de la borne la plus proche, ou de l'une des bornes les plus proches, l'usager compose l'identificateur de terminal, par exemple le numéro téléphonique MSISDN, à une sous-étape E32. Puis à la sous-étape E33, la borne BN transmet un message ME5 contenant le numéro MSISDN au serveur de borne SB qui le compare au numéro MSISDN mémorisé précédemment et extrait du message ME1 à la sous-étape E34. Si les deux numéros comparés sont identiques, le serveur de gestion de borne SB valide ainsi l'identificateur MSISDN et transmet un message d'activation de la borne à la borne BN à la sous-étape E35 afin que l'usager utilise celle-ci après une authentification d'usager et une personnalisation de borne, comme on le verra plus loin.

Dans le cas contraire, le serveur SB invite l'usager à composer à nouveau son numéro MSISDN sur le clavier CL de la borne BN et après deux ou trois tentatives de composition de numéro infructueuses, maintient la désactivation de la borne BN.

Pour la mise en oeuvre de l'activation de bornes selon la première réalisation décrite précédemment en référence à la figure 4, l'interface radio IRA de la borne BN montrée à la figure 2 n'est pas utilisée. En effet, la borne est activée par l'intermédiaire du réseau radiotéléphonique RR et du serveur SB sans une liaison directe avec le terminal mobile TM.

Selon la deuxième réalisation du procédé d'activation de bornes de l'invention, l'interface radio IRA est capable de communiquer à travers une liaison radioélectrique LRA selon la technologie de communications sans fil Bluetooth avec un petit module d'émission-réception radioélectrique Bluetooth MRB inclus dans le terminal mobile TM. Le module MRB comprend une interface radio et un microcontrôleur ayant en commun l'interface homme-machine du terminal TM comprenant l'afficheur, le clavier et le circuit audio, avec le microcontrôleur gérant les communications radiotéléphoniques avec le réseau RR. Le terminal TM est par exemple, selon la première variante de la deuxième réalisation, un terminal radiotéléphonique mobile de type bimode pouvant communiquer soit à travers le réseau de radiotéléphonie cellulaire RR, soit à travers la liaison radioélectrique de proximité LRA, ou selon une deuxième variante de la deuxième réalisation, un terminal radio mobile de type micro-ordinateur portable, baladeur musical, ou assistant numérique personnel doté du module MRB ne communiquant qu'à travers la liaison radioélectrique de proximité LRA. La liaison radioélectrique de proximité LRA peut être du type DECT, ou bien du type Bluetooth auquel on se référera dans la suite à titre d'exemple.

Le mode Bluetooth est sélectionné dans le terminal mobile TM en sollicitant une touche spécifique, ou bien en sélectionnant un item dans le menu principal présenté à l'écran du terminal présentant les deux modes de transmission précités.

Le mode de transmission radio Bluetooth concerne une liaison radioélectrique dans une bande de fréquence étroite typiquement centrée sur une fréquence de 2,45 GHz, nettement plus élevée que la bande de fréquence pour le réseau de radiotéléphonie RR, avec une couverture radioélectrique ayant une portée faible inférieure à 50 ou 100 mètres environ pour une puissance d'émission depuis la borne de 20 dBm environ. La liaison Bluetooth LR transfère des données, y compris de la voix numérisée, par exemple avec un débit de 721 kbit/s suivant le sens descendant de la borne BN vers le terminal TM et un débit moins élevé de 57 kbit/s suivant le sens montant du terminal TM vers la borne BN. La liaison LRA supporte simultanément plusieurs canaux numériques de communication de données multiplexés suivant chaque sens de transmission entre I terminaux mobiles TM1 à TMI situés au voisinage de la borne, et la borne BN comme montré schématiquement à la figure 5. Typiquement, l'entier I est égal à 7. En outre, parmi les I canaux numériques, plusieurs canaux de communication téléphonique entre J terminaux mobiles et la borne BN, avec J<I, typiquement J=3, peuvent être supportés simultanément par la liaison radioélectrique LRA de manière à permettre des communications téléphoniques simultanées entre des terminaux mobiles et le réseau téléphonique commuté RTC à travers la borne BN.

L'un des principaux avantages de la liaison Bluetooth LRA est la capacité pour les terminaux TM1 à TMI de communiquer directement par liaison radioélectrique de faible portée avec la borne BN, sans traversée d'un réseau de télécommunication, tel que le réseau RR, et sans nécessité de rester en vision directe avec la borne, comme c'est le cas pour les transmissions infrarouges, permettant un déplacement des terminaux mobiles devant la borne.

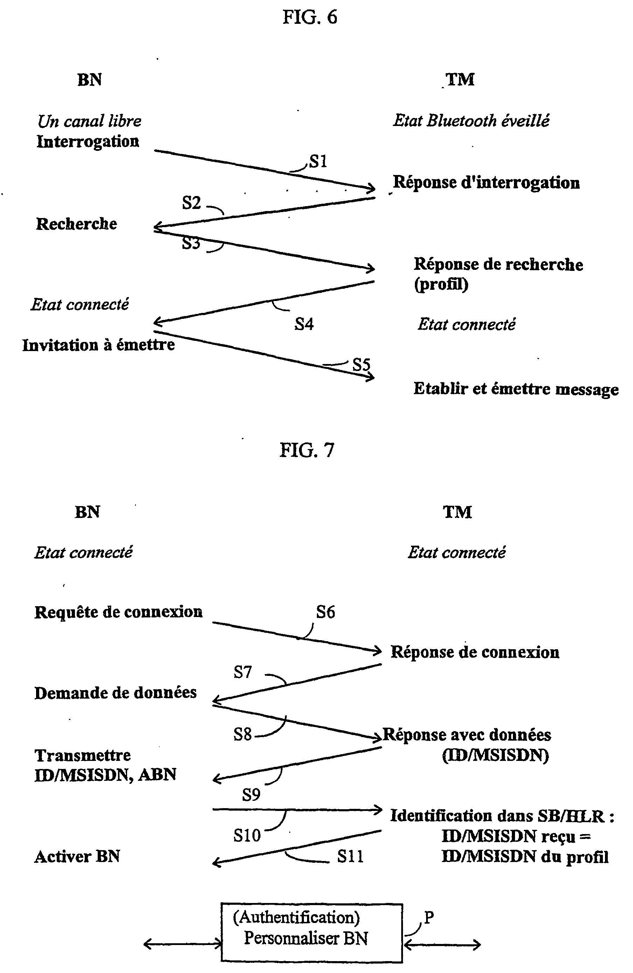

En référence aux figures 6 et 7, l'activation de la borne BN afin d'établir une communication à travers l'un des canaux numériques de la liaison LRA avec l'un des terminaux mobiles TM1 à TMI, désigné dans la suite par TM, est décrite ci-après. Au cours de cette activation, la borne BN faisant office de dispositif local est le maître pour prendre l'initiative de la connexion, et le terminal mobile TM faisant office de dispositif éloigné, ou tout autre objet électronique portable de télécommunication selon le mode Bluetooth, est esclave. Pendant l'activation, il n'y a aucune interactivité entre l'écran EC et le clavier à touches tactiles CL de la borne BN et l'usager à travers son terminal mobile TM.

L'activation de la borne BN par le terminal radio mobile TM comprend des étapes S1 à S9. Initialement, au moins l'un des canaux numériques de communication est disponible, la borne BN scrute périodiquement la présence d'un téléphone mobile TM dans la couverture radioélectrique de quelques dizaines de mètres, et le terminal TM a sélectionné le mode de transmission Bluetooth, comme indiqué à l'étape S1 dans la figure 6. Ainsi, la borne émet périodiquement une interrogation (Inquiry) et le terminal TM signale sa présence lorsque l'usager a sélectionné le mode Bluetooth sur le terminal TM et dès que le terminal pénètre dans la couverture radio de la borne BN, s'il n'y est pas déjà. Pour signaler sa présence, le terminal transmet une réponse à l'interrogation à l'étape suivante S2 dès qu'il a reconnu l'interrogation. Puis aux étapes suivantes S2 à S5, le terminal mobile TM se connecte à la borne BN en fonction d'un profil d'accès prémémorisé au niveau du microcontrôleur relatif au mode Bluetooth dans le terminal et définissant un protocole de messages. Ce profil d'accès (Generic Access Profile) est déclaré à la borne et conditionne une communication entre la borne et le terminal. La mémoire MA de la borne BN a mémorisé préalablement tous les profils de terminal. Par exemple, lorsque le terminal radio mobile est véritablement un téléphone sans fil, le profil est propre à un téléphone sans fil en l'occurrence un terminal radiotéléphonique bimode défini ci-dessus, alors que selon un deuxième exemple, lorsque le terminal radio mobile est un objet portable du type micro-ordinateur ou assistant portable, le profil intègre un service de synchronisation de fichiers par exemple. Ainsi, le terminal TM à l'état éveillé pour rechercher une borne est en mode "recherche" (Discoverable Mode) à l'étape S2 pour accepter une demande de connexion par la borne.

A la réception de la réponse à l'interrogation, la borne BN émet un message de recherche (Page) à l'étape S3. Puis le terminal TM transmet une réponse de recherche à l'étape S4 en déclarant son type de profil d'accès, ce qui confirme à la borne que le terminal souhaite établir une connexion avec la borne selon ce profil. A l'étape suivante S5, la borne BN transmet un message d'invitation à émettre (Pool) pour qu'ultérieurement le terminal TM établisse et émette un message de données.

Le dialogue pour l'établissement de la connexion et pour le transfert de données entre la borne BN et le terminal TM selon les figures 6 et 7 suit un protocole de recherche de service SDP (Service Discovery Protocol) qui est implémenté dans l'unité de traitement CPU de la borne et dans le microcontrôleur gérant le module radio Bluetooth MRB dans le terminal mobile TM.

Après la procédure d'établissement de la liaison décrite selon la figure 6, le terminal TM transfère des données à la borne BN. Pour ce transfert, la borne et le terminal supportent des profils de type échange d'objets (Generic Object Exchange Profile) et transfert de fichiers (File Transfer) pour transférer un ou plusieurs fichiers du terminal vers la borne. Pour accéder au service de la borne, au moins un fichier du terminal est transféré vers la borne.

Comme montré à la figure 7, le transfert d'un fichier de données depuis le terminal TM vers la borne comprend les étapes suivantes S6, S7 et S8. La borne BN et le terminal TM étant à l'état connecté après la procédure d'établissement montrée à la figure 6, la borne BN transmet une requête de connexion à travers la liaison LRA vers le terminal TM à l'étape S6. Puis le terminal TM transmet une réponse de connexion à l'étape S7 afin que la borne BN prépare une demande de données (Get Request) (étape S8) incluant la définition de différents paramètres que doit retransmettre le terminal, parmi lesquels un identificateur du terminal. Ainsi à l'étape S9, en réponse à la demande de données, le terminal TM établit et émet un message de réponse comprenant les différents paramètres demandés ainsi que les données du fichier à transférer.

Les paramètres transférés depuis le terminal mobile TM vers la borne BN comprennent au moins un identificateur d'usager ID en mémoire morte du terminal TM, qui peut être confondu avec l'identificateur international d'usager IMSI (International Mobile Subscriber Identity) et/ou le numéro téléphonique international de l'usager MSISDN lorsque le terminal mobile est un terminal radiotéléphonique bimode. L'identificateur d'usager ID fait correspondre l'usager à un profil de service définissant un ou plusieurs services auxquels l'usager souhaite avoir accès sur la borne en dépendance de son profil d'usager PU lorsqu'il a souscrit son abonnement auprès de l'opérateur gérant les bornes interactives.

Suite à l'invitation de transmettre des données, telles que identificateur ID, IMSI, MSISDM à l'étape S8, la borne BN reçoit du terminal TM l'identificateur à l'étape S9 et retransmet celui-ci avec son adresse ABN à un moyen de gestion à travers le réseau de télécommunication RT, à l'étape S10. En général, pour tous les terminaux, le moyen de gestion est le serveur de gestion de borne SB déjà décrit en référence à la figure 3. Toutefois en variante, pour les terminaux mobiles ayant communiqué un profil d'accès pour terminal radiotéléphonique à la borne, la borne retransmet l'identificateur à l'enregistreur de localisation nominal HLR du réseau de radiotéléphonie RR.

Le serveur de gestion de borne SB ou l'enregistreur HLR vérifie que l'usager ainsi identifié et de préférence authentifié comme expliqué ci-après a le droit d'accéder à des services par la borne BN, comme à l'étape E34 selon la première réalisation. Puis, le serveur SB ou l'enregistreur HLR ayant validé l'identificateur reçu du terminal TM via la borne transmet un message d'activation à la borne BN à l'étape S11.

Après l'étape de connexion E3 selon la première réalisation montrée à la figure 4, ou après les étapes de transfert de données S6 à S10 selon la deuxième réalisation montrée à la figure 7, une authentification de l'usager du terminal TM est réalisée, en complément de la comparaison de l'identificateur ID ou IMSI ou MSISDN attaché au terminal à l'étape E34, S10, par exemple au moyen d'un identificateur plus personnel de l'usager, tel que le code secret d'une carte à mémoire de l'usager qui est déjà mémorisé dans le profil de l'usager PU dans le serveur SB ou l'enregistreur HLR et qui est lu dans une carte à puce introduite dans le lecteur LC de la borne BN à l'étape E32 selon la première réalisation ou à l'étape S9 selon la deuxième réalisation. De même, l'usager du terminal mobile TM peut être authentifié par comparaison entre une empreinte biométrique déjà mémorisée dans le profil de l'usager PU dans l'enregistreur HLR avec l'empreinte biométrique apposée par l'usager lue à travers le capteur biométrique CB de la borne BN.

Après l'authentification, les données représentant les types de service souhaités par l'usager sont transférées par le serveur SB ou l'enregistreur HLR vers la borne de manière à personnaliser les fonctionnalités de celle-ci. Il est rappelé que l'usager a été identifié par le transfert de l'identificateur ID ou MSISDN ou IMSI par le terminal mobile TM à la borne BN au niveau de l'étape E34 selon la première réalisation et au niveau de l'étape S10 selon la deuxième réalisation.

La personnalisation P de la borne BN est ensuite déclenchée par le moyen de gestion, c'est-à-dire le serveur de gestion SB et/ou l'enregistreur de localisation nominal HLR du réseau de radiotéléphonie RR après validation de l'identificateur à l'étape E34 ou S11. En particulier, le serveur SB ou l'enregistreur HLR vérifie que l'usager reconnu par son identificateur ID, IMSI ou MSISDN a bien souscrit à un abonnement pour utilisation de borne multimédia interactive selon l'invention et retourne vers la borne BN le profil d'usager PU correspondant à l'abonnement de l'usager de manière à personnaliser la borne.

En général, l'abonnement le plus complet correspond à une transformation de la borne en un terminal interactif afin d'offrir toutes les fonctionnalités d'un bureau mobile.

La configuration de la borne selon les données de personnalisation lues dans le profil de l'usager PU sont par exemple :
- des procédures "raccourcies" vers des correspondants les plus fréquemment appelés, vers des sites préférés notamment du réseau internet, vers des applications bureautiques les plus utilisées, etc. ; par exemple l'accès à ces différents services sont respectivement matérialisés sur l'écran EC de la borne active BN par des icônes ;
- listes des adresses favorites URL (Universal Resource Locator), accessibles à partir d'un navigateur implémenté dans la borne BN, ou à partir d'une application pilotant le navigateur ;
- répertoires de tout correspondant, dans un réseau téléphonique, et/ou dans des réseaux spécialisés ou dans le réseau internet dont des sous-répertoires sont directement accessibles par les applications en relation respectivement avec le réseau téléphonique, des réseaux spécialisés ou le réseau internet ;
- répertoires d'adresses de courrier électronique ;
- listes d'applications bureautiques autorisées par le profil d'abonnement PU de l'usager.

En outre, la borne BN préserve en mémoire MD un espace de mémoire personnel pour l'usager afin qu'il enregistre divers documents, fichiers et messages personnels. Ceux-ci sont organisés de préférence selon une structure arborescente afin de permettre à l'usager de cliquer sur un document, un fichier ou un message pour lancer une application de traitement de celui-ci correspondante, de manière analogue à des applications de traitement de textes, tableurs, etc. dans un ordinateur personnel. Toute application bureautique est de préférence téléchargée dans la borne depuis un serveur dédié aux bornes en fonction par exemple de la fréquence d'utilisation de l'application, ou bien réside dans la borne tant que celle-ci n'est pas désactivée par l'usager.

Après cette configuration, l'usager utilise les moyens définis par son profil dans la borne pour communiquer avec un terminal demandé TD de son choix, ou bien un serveur d'information demandé SD de son choix.

## Revendications

1. Procédé pour activer depuis un terminal radio mobile (TM) une borne interactive (BN) reliée à un réseau de télécommunication (RT), le terminal mobile (TM) et la borne interactive (BN) comprenant des moyens respectifs (MRB, IRA) pour échanger des données à travers une liaison radioélectrique (LRA) ayant une couverture radioélectrique de proximité, la borne (BN) scrutant (S1) périodiquement la présence du terminal mobile (TM) dans ladite couverture radioélectrique, **caractérisé en ce qu'**il comprend les étapes suivantes après signalement de la présence du terminal dans la couverture radioélectrique de proximité à la borne :
- déclarer (S2-S4) un type de profil d'accès par le terminal mobile (TM) à la borne (BN) afin que le profil d'accès conditionne une communication entre la borne et le terminal mobile,
- transmettre (S6-S8) un message depuis la borne (BN) au terminal mobile (TM) pour inviter le terminal à transmettre (S9) un identificateur (MSISDN, ID) du terminal à la borne (BN), et
- transmettre (S10) l'identificateur (ID, MSISDN) du terminal mobile depuis la borne (BN) à un moyen de gestion (SB, HLR) à travers le réseau de télécommunication (RT) afin d'activer (S11) la borne par le moyen de gestion lorsque celui-ci valide l'identificateur du terminal radio mobile (TM).

2. Procédé selon la revendication 1, selon lequel le terminal mobile (TM) est un terminal bimode tantôt pour des communications radiotéléphoniques avec un réseau de radiotéléphonie (RR) relié au réseau de télécommunication (RT), tantôt pour des communications avec la borne (BN) à travers ladite liaison radioélectrique (LRA) qui a de préférence une bande de fréquence plus élevée que celle du réseau de radiotéléphonie (RR).

3. Procédé selon la revendication 2, selon lequel le moyen de gestion est inclus au moins en partie dans un moyen de localisation nominal (HLR) du réseau de radiotéléphonie (RR).

4. Procédé selon l'une quelconque des revendications 1 à 3, selon lequel la liaison radioélectrique (LRA) supporte simultanément plusieurs canaux de communication téléphonique entre plusieurs terminaux mobiles (TM) et la borne (BN).

5. Procédé selon l'une quelconque des revendications 1 à 4, selon lequel la liaison radioélectrique (LRA) supporte plusieurs canaux de données entre plusieurs terminaux mobiles (TM1 à TMI) et la borne (BN).

6. Procédé selon l'une quelconque des revendications 1 à 5, selon lequel le moyen de gestion (SB) est dédié à la gestion de plusieurs bornes (BN), ainsi qu'à la gestion de profils d'usager (PU) qui font correspondre pour chaque terminal mobile (TM) des accès à des services prédéterminés accessibles à travers les bornes.

7. Procédé selon l'une quelconque des revendications 1 à 6 comprenant après la validation de l'identificateur du terminal par le moyen de gestion (SB, HLR), une personnalisation (P) des fonctionnalités de la borne (BN) au moyen d'un profil d'usager (PU) associé à l'identificateur validé (MSISDN) du terminal et transmis depuis le moyen de gestion (HLR, SB).

8. Procédé selon la revendication 7, comprenant une authentification de l'usager du terminal (TM) par le moyen de gestion (SB, HLR) avant la personnalisation (P) des fonctionnalités de la borne (BN).

9. Procédé selon la revendication 8, selon lequel l'authentification comprend une lecture d'un code secret d'une carte à puce d'usager introduite dans un lecteur de carte (LC) de la borne, ou une lecture d'une empreinte biométrique d'usager dans un capteur biométrique (CB) de la borne.

10. Borne interactive à activer depuis un terminal radio mobile (TM) comprenant un moyen de visualisation (EC, CDV), un moyen d'interface de ligne (IL) relié à un réseau de télécommunication (RT), un moyen de dialogue radio (IRA, CPU) pour échanger des données avec le terminal mobile à travers une liaison radioélectrique (LRA) ayant une couverture radioélectrique de proximité, la borne (BN) scrutant (S1) périodiquement la présence du terminal mobile (TM) dans ladite couverture radioélectrique, **caractérisée en ce que** :
- elle comprend un moyen (MA) pour mémoriser des profils d'accès de terminal afin qu'un profil d'accès déclaré par le terminal mobile (TM) à la borne (BN) conditionne une communication entre la borne et le terminal mobile, après signalement de la présence du terminal dans la couverture radioélectrique de proximité à la borne,
- le moyen de dialogue radio (IRA, CPU) dans la borne transmet (S6-S8) un message au terminal mobile (TM) pour inviter le terminal à transmettre (S9-S10) un identificateur (MSISDN, ID) du terminal, et
- le moyen d'interface de ligne (IL, CPU) transmet (S10) l'identificateur (ID, MSISDN) du terminal mobile à un moyen de gestion (SB, HLR) à travers le réseau de télécommunication (RT) afin d'activer (S11) la borne par le moyen de gestion lorsque celui-ci valide l'identificateur du terminal radio mobile (TM).

11. Borne selon la revendication 10, comprenant un clavier (CL) et/ou un moyen de reconnaissance de parole (MP, CDA) pour transmettre notamment l'identificateur de terminal (MSISDN) au moyen de gestion (SB, HLR).

12. Borne selon la revendication 10 ou 11, comprenant un moyen (RD, CDA, CL) pour régler la directivité de moyens audio (MP, HP) inclus dans la borne.

13. Borne selon l'une quelconque des revendications 10 à 12, comprenant un moyen (IRA) pour échanger des données avec au moins un terminal mobile (TM) à travers une liaison radioélectrique (LRA) ayant une couverture radioélectrique de proximité.

14. Borne selon l'une quelconque des revendications 10 à 13, comprenant un lecteur de carte à puce (LC) ou un capteur biométrique (CB) pour notamment authentifier l'usager du terminal mobile (TM).

## Patentansprüche

1. Verfahren zum Aktivieren eines mit einem Telekommunikationsnetz (RT) verbundenen dialogfähigen Anschlusses (BN) von einem Mobilfunkendgerät (TM) aus, wobei das Mobilfunkgerät (TM) und der dialogfähige Anschluß (BN) jeweilige Mittel (MRB, IRA) zum Austauschen von Daten über einer Funkverbindung (LRA) mit einem Nahbereichs-Funkversorgungsgebiet umfassen, wobei der Anschluß (BN) periodisch das Vorhandensein des Mobilgeräts (TM) im Funkversorgungsgebiet abfragt (S1), **dadurch gekennzeichnet, daß** es nach Signalisierung des Vorhandenseins des Endgeräts im Nahbereichs-Funkversorgungsgebiet des Anschlusses die folgenden Stufen umfaßt:
- Erklären (S2-S4) eines Zugangsprofils vom Mobilfunkgerät (TM) zum Anschluß (BN), damit das Zugängsprofil eine Kommunikation zwischen dem Anschluß und dem Mobilfunkgerät verarbeitet,
- Übertragen (S6-S8) einer Nachricht vom Anschluß (BN) aus zum Mobilfunkgerät (TM) zum Veranlassen, daß das Endgerät eine Kennzeichnung (MSISDN, ID) vom Endgerät zum Anschluß (BN) überträgt (S9), und
- Übertragen (S10) der Kennzeichnung (ID, MSISDN) des Mobilfunkgeräts vom Anschluß (BN) aus zu einem Verwaltungsmittel (SB, HLR) über das Telekommunikationsnetz (RT) zum Aktivieren (S11) des Anschlusses durch das Verwaltungsmittel, wenn das letztere die Kennzeichnung des Mobilfunkendgeräts (TM) validiert.

2. Verfahren nach Anspruch 1, wonach das Mobilfunkgerät (TM) ein Doppelmodus-Endgerät ist, einmal für Mobilfunkgerätkommunikationen mit einem mit dem Telekommunikationsnetz (RT) verbundenen Mobilfunknetz (RR), und einmal für Kommunikationen mit dem Anschluß (BN) über die Funkverbindung (LRA), die vorzugsweise ein höheres Frequenzband als die des Mobilfunknetzes (RR) aufweist.

3. Verfahren nach Anspruch 2, wonach das Verwaltungsmittel mindestens teilweise in einem nominellen Lokalisierungsmittel (HLR) des Mobilfunknetzes (RR) enthalten ist.

4. Verfahren nach einem der Ansprüche 1 bis 3, wonach die Funkverbindung (LRA) gleichzeitig mehrere Telefonkommunikationskanäle zwischen mehreren Mobilfunkgeräten (TM) und dem Anschluß (BN) unterstützt.

5. Verfahren nach einem der Ansprüche 1 bis 4, wonach die Funkverbindung (LRA) mehrere Datenkanäle zwischen mehreren Mobilfunkgeräten (TM1 bis TMI) und dem Anschluß (BN) unterstützt.

6. Verfahren nach einem der Ansprüche 1 bis 5, wonach das Verwaltungsmittel (SB) der Verwaltung von mehreren Anschlüssen (BN) zugeordnet ist, und auch der Verwaltung von Teilnehmerprofilen (PU), die bewirken, daß über die Anschlüsse zugängliche Zugriffe zu vorbestimmten Diensten jedem Mobilfunkgerät (TM) entsprechen.

7. Verfahren nach einem der Ansprüche 1 bis 6 mit folgendem: nach der Validierung der Kennzeichnung des Endgeräts durch das Verwaltungsmittel (SB, HLR), Individualisierung (P) der Funktionalitäten des Anschlusses (BN) mittels eines Teilnehmerprofils (PU), das der validierten Kennzeichnung (MSISDN) des Endgeräts zugeordnet und vom Verwaltungsmittel (HLR, SB) aus übertragen worden ist.

8. Verfahren nach Anspruch 7 mit einer Authentifizierung des Teilnehmers des Endgeräts (TM) durch das Verwaltungsmittel (SB, HLR) vor der Individualisierung (P) der Funktionalitäten des Anschlusses (BN).

9. Verfahren nach Anspruch 8, wonach die Authentifizierung ein Ablesen eines Geheimcodes von einer, in einen Kartenleser (LC) des Anschlusses eingeführten Chipkarte des Teilnehmers oder ein Ablesen eines biometrischen Abdrucks des Teilnehmers in einem biometrischen Aufnehmer (CB) des Anschlusses umfaßt.

10. Von einem Mobilfunkendgerät (TM) aus zu aktivierender dialogfähiger Anschluß mit einem Anzeigemittel (EC, CDV), einem mit einem Telekommunikationsnetz (RT) verbundenen Leitungsschnittstellenmittel (IL), einem Funkdialogmittel (IRA, CPU) zum Austauschen von Daten mit dem Mobilfunkgerät über eine Funkverbindung (LRA) mit einem Nahbereichs-Funkversorgungsgebiet, wobei der Anschluß (BN) periodisch das Vorhandensein des Mobilfunkgeräts (TM) im Funkversorgungsgebiet abfragt (S1), **dadurch gekennzeichnet, daß**:
- er ein Mittel (MA) zum Speichern der Zugangsprofile des Endgeräts umfaßt, damit durch ein, dem Anschluß (BN) durch das Mobilfunkgerät (TM) gemeldetes Zugangsprofil eine Kommunikation zwischen dem Anschluß und dem Mobilfunkgerät veranlaßt wird, nach Signalisierung des Vorhandenseins des Endgeräts in dem Nahbereichs-Funkversorgungsgebiet des Anschlusses,
- das Funkdialogmittel (IRA, CPU) im Anschluß eine Nachricht zum Mobilfunkgerät (TM) überträgt (S6-S8), um das Endgerät zu veranlassen, eine Kennzeichnung (MSISDN, ID) des Endgeräts zu übertragen (S9-S10), und
- das Leitungsschnittstellenmittel (IL, CPU) die Kennzeichnung (ID, MSISDN) des Mobilfunkgeräts über das Telekommunikationsnetz (RT) zu einem Verwaltungsmittel (SB, HLR) überträgt (S10), um den Anschluß durch das Verwaltungsmittel zu aktivieren (S11), wenn das letztere die Kennzeichnung des Mobilfunkendgeräts (TM) validiert.

11. Anschluß nach Anspruch 10 mit einer Tastatur (CL) und/oder einem Spracherkennungsmittel (MP, CDA) zum Übertragen insbesondere der Kennzeichnung des Endgeräts (MSISDN) zum Verwaltungsmittel (SB, HLR).

12. Anschluß nach Anspruch 10 oder 11 mit einem Mittel (RD, CDA, CL) zum Steuern der Richtwirkung der im Anschluß enthaltenen akustischen Mittel (MP, HP).

13. Anschluß nach einem der Ansprüche 10 bis 12 mit einem Mittel (IRA) zum Austauschen von Daten mit mindestens einem Mobilfunkgerät (TM) über eine Funkverbindung (LRA) mit einem Nahbereichs-Funkversorgungsgebiet.

14. Anschluß nach einem der Ansprüche 10 bis 13 mit einem Chipkartenleser (LC) oder einem biometrischen Aufnehmer (CB), um insbesondere den Teilnehmer des Mobilfunkgeräts (TM) zu authentifizieren.

## Claims

1. A method of activating, from a mobile radio terminal (TM), an interactive station (BN) connected to a telecommunication network (RT), the mobile terminal (TM) and the interactive station (BN) comprising respective means (MRB, IRA) for exchanging data over a radio link (LRA) providing local radio coverage area, the station (BN) periodically scanning (S1) for the presence of the mobile terminal (TM) in said radio coverage area, **characterized in that** it comprises the following steps after the presence of the terminal in the local radio coverage area is signaled to the station:
- declaring (S2-S4) an access profile type by the mobile terminal (TM) to the station (BN) so that the access profile conditions a communication between the station and the mobile terminal,
- transmitting (S6-S8) a message from the station (BN) to the mobile terminal (TM) to prompt the terminal to send (S9-S10) an identifier (MSISDN, ID) of the terminal to the station (BN), and
- transmitting (S10) the identifier (ID, MSISDN) of the mobile terminal from the station (BN) to management means (SB, HLR) through the telecommunication network (RT) in order for the station to be activated (S11) by the management means when the latter validates the identifier of the mobile radio terminal (TM).

2. A method according to claim 1, wherein the mobile terminal (TM) is a dual mode terminal either for radiotelephone communications with a radiotelephony network (RR) connected to the telecommunication network (RT), or for communications with the station (BN) over said radio link (LRA) whose frequency band is preferably higher than that of the radiotelephony network (RR).

3. A method according to claim 2, wherein the management means is included at least in part in a home location register (HLR) of the radiotelephony network (RR).

4. A method according to any of claims 1 to 3, wherein the radio link (LRA) supports simultaneously a plurality of telephone communication channels between a plurality of mobile terminals (TM) and the station (BN).

5. A method according to any of claims 1 to 4, wherein the radio link (LRA) supports a plurality of data channels between a plurality of mobile terminals (TM1 to TMI) and the station (BN).

6. A method according to any of claims 1 to 5, wherein the management means (SB) is dedicated to management of a plurality of stations (BN) and to management of user profiles (PU) that match to each mobile terminal (TM) rights to access to predetermined services accessible via the stations.

7. A method according to any of claims 1 to 6 comprising, after validation of the identifier of the terminal by the management means (SB, HLR), personalization (P) of the functions of the station (BN) by means of a user profile (PU) associated with the validated identifier (MSISDN) of the terminal and transmitted from the management means (HLR, SB).

8. A method according to claim 7, including authentication of the user of the terminal (TM) by the management means (SB, HLR) prior to personalization (P) of the functions of the station (BN).

9. A method according to claim 8, wherein authentication includes reading a secret code from a user smart card inserted into a card reader (LC) of the station, or reading a user biometric print via a biometric sensor (CB) of the station.

10. An interactive station to be activated from a mobile radio terminal (TM) and including display means (EC, CDV), line interface means (IL) connected to a telecommunication network (RT), and radio dialogue means (IRA, CPU) for exchanging data with the mobile terminal over a radio link (LRA) providing local radio coverage area, the station (BN) periodically scanning (S1) for the presence of the mobile terminal (TM) in said radio coverage area, **characterized in that**:
- it comprises means (MA) for storing terminal access profiles so that an access profile declared by the mobile terminal (TM) to the station (BN) conditions communication between the station and the mobile station after the presence of the terminal in the local radio coverage area is signaled to the station,
- the radio dialogue means (IRA, CPU) in the station sends (S6-S8) a message to the mobile terminal (TM) to prompt the terminal to send (S9-S10) an identifier (MSISDN, ID) of the terminal, and
- the line interface means (IL, CPU) sends (S10) the identifier (ID, MSISDN) of the mobile terminal to management means (SB, HLR) through the telecommunication network (RT) in order for the station to be activated (S11) by the management means when the latter validates the identifier of the mobile radio terminal (TM).

11. A station according to claim 10, including a keypad (CL) and/or voice recognition means (MP, CDA) for sending the terminal identifier (MSISDN) to the management means (SB, HLR) in particular.

12. A station according to claim 10 or 11, including means (RD, CDA, CL) for adjusting the directivity of audio means (MP, HP) included in the station.

13. A station according to any of claims 10 to 12, including means (IRA) for exchanging data with at least one mobile terminal (TM) over a radio link (LRA) providing local radio coverage area.

14. A station according to any of claims 10 to 13, including a smart card reader (LC) or a biometric sensor (CB) for authenticating the user of the mobile terminal (TM) in particular.
